# EUROPÄISCHE PATENTSCHRIFT

(11) **EP 1 161 623 B1**
(45) Veröffentlichungstag und Bekanntmachung des Hinweises auf die Patenterteilung: **07.10.2009**
(21) Anmeldenummer: 00988607.8
(22) Anmeldetag: 10.11.2000
(51) Int. Cl.: F02D 13/04, F01L 9/04, F02D 41/06

(54) **VERFAHREN ZUR AUSLAUFSTEUERUNG EINER BRENNKRAFTMASCHINE**
METHOD FOR CONTROLLING THE STOPPING PROCESS OF AN INTERNAL COMBUSTION ENGINE
PROCEDE POUR COMMANDER L'ARRET D'UN MOTEUR A COMBUSTION INTERNE

(30) Priorität: 17.12.1999 DE 19960984
(43) Veröffentlichungstag der Anmeldung: 12.12.2001
(73) Patentinhaber: ROBERT BOSCH GMBH, 70442 Stuttgart (DE)
(72) Erfinder: SIEBER, Udo, 74321 Bietigheim (DE)
(86) Internationale Anmeldenummer: PCT/DE2000/004013
(87) Internationale Veröffentlichungsnummer: WO 2001/044636

(56) Entgegenhaltungen:
- EP-A- 1 074 713
- DE-A- 19 741 294
- US-A- 5 255 650

## Beschreibung

### Stand der Technik

Die vorliegende Erfindung betrifft ein Verfahren zur Auslaufsteuerung einer Brennkraftmaschine, wobei der Kolben in mindestens einem Zylinder der Maschine in eine gezielte Position gebracht wird, die einer deutlich nach dem oberen Totpunkt liegenden Winkelstellung der Kurbelwelle entspricht.

Bei Brennkraftmaschinen mit sogenanntem internen Direktstart, bei der die Brennkraftmaschine selbst als Startmaschine dient, ist es Voraussetzung, daß sich mindestens in einem Zylinder der Kolben in einer Position befindet, die deutlich nach dem oberen Totpunkt liegt. Wird dann nämlich in den Zylinder Kraftstoff eingespritzt und gezündet, so reicht das dabei entstehende Verbrennungsmoment zum Andrehen des Motors aus. Für eine solche direkt startende Brennkraftmaschine wird gemäß der DE 197 41 294 A1 vorgeschlagen, zum Start des Motors die Kurbelwelle über eine elektrische Maschine in eine vorgegebene Startposition zu bringen, so daß bei Erreichen der Startposition der Kurbelwelle die Zündung des in einen Startzylinder eingespritzten Kraftstoffes erfolgt. Des weiteren ist in dieser DE 197 41 294 A1 auch erwähnt, daß die für den Direktstart erforderliche Stellung des Kolbens in mindestens einem Zylinder bereits beim Auslaufen der Kurbelwelle gezielt eingestellt werden kann. Mit welchen Mitteln oder nach welchem Verfahren diese gezielte Auslaufposition erreichbar ist, beschreibt die genannte Druckschrift nicht.

### Aufgabe und Lösung

Der Erfindung liegt die Aufgabe zugrunde, ein Verfahren zur Auslaufsteuerung einer Brennkraftmaschine der eingangs genannten Art anzugeben, nachdem mit möglichst geringem Aufwand beim Auslaufen der Brennkraftmaschine der Kolben in mindestens einem Zylinder in eine gezielte Position, die einen Direktstart der Maschine ermöglicht, gebracht werden kann.

Die genannte Aufgabe wird mit den Merkmalen des Anspruchs 1 dadurch gelöst, daß die Gasauslaßventile von einem oder mehreren Zylindern der Brennkraftmaschine nach Abschalten der Zündung für einen oder mehrere Zeitabschnitte geschlossen werden, wobei Beginn und Ende eines jeden Ventilschließabschnitts so gesteuert werden, daß die Kurbelwelle in der gewünschten Auslaufposition stehenbleibt. Gemäß der Erfindung kann bei einer mit einer variablen Ventilsteuerung ausgestatteten Brennkraftmaschine, diese Ventilsteuerung auch für eine gezielte Auslaufsteuerung des Motors eingesetzt werden, ohne daß dann zusätzliche Mittel erforderlich sind.

Vorteilhafte Ausführungen und Weiterbildungen der Erfindung gehen aus den Unteransprüchen hervor.

Danach wird in einem ersten Verfahrensschritt nach Abschalten der Zündung nach einer vorgegebenen Anzahl von Kurbelwellenumdrehungen die Drehgeschwindigkeit der Kurbelwellen beim Durchlaufen des oberen Totpunktes gemessen. In einem zweiten Verfahrensschritt werden im darauffolgenden unteren Totpunkt die Gasaustauschventile des mindestens einen Zylinders für einen ersten Ventilschließabschnitt geschlossen. In einem dritten Verfahrensschritt wird die Drehgeschwindigkeit der Kurbelwelle beim Durchlaufen einer vorgegebenen Winkelstellung nach dem unteren Totpunkt erneut gemessen. In einem vierten Verfahrensschritt wird in Abhängigkeit von den beiden Meßwerten der Drehgeschwindigkeit der Kurbelwelle das Ende des ersten Ventilschließabschnitts bestimmt. Im letzten Verfahrensschritt werden im Fall einer beim oberen Totpunkt gemessenen, einem Maximalwert der kinetischen Energie entsprechenden Drehgeschwindigkeit der Kurbelwelle die Gasaustauschventile mindestens eines weiteren Zylinders für einen zweiten Ventilschließabschnitt geschlossen, wobei der Schließ- und der Öffnungszeitpunkt dieser Gasaustauschventile in Abhängigkeit der beiden Meßwerte der Drehgeschwindigkeit der Kurbelwelle bestimmt werden.

Es ist zweckmäßig, in Abhängigkeit von der Differenz der beiden Meßwerte der Drehgeschwindigkeit und von der nach dem unteren Totpunkt gemessenen Drehgeschwindigkeit der Kurbelwelle aus einem ersten Kennfeld das Ende des ersten Ventilschließabschnitts, aus einem zweiten Kennfeld den Beginn des zweiten Ventilschließabschnitts und aus einem dritten Kennfeld das Ende des zweiten Ventilschließabschnitts herauszulesen.

In einer bevorzugten Ausführungsform wird der erste Ventilschließabschnitt bei einer Winkelstellung der Kurbelwelle von 180° vor der vorgegebenen Auslaufposition beendet, wenn die beim oberen Totpunkt gemessene Drehgeschwindigkeit einem Minimalwert der kinetischen Energie entspricht, und der erste Ventilabschnitt wird bei einer Winkelstellung der Kurbelwelle von 90° vor der vorgegebenen Auslaufposition beendet, wenn die beim oberen Totpunkt gemessene Drehgeschwindigkeit einem Maximalwert der kinetischen Energie entspricht.

Vorzugsweise wird der zweite Ventilschließabschnitt bei einer Winkelstellung der Kurbelwelle von 90° vor der vorgegebenen Auslaufposition begonnen und bei einer Winkelposition, die in der Nähe der Auslaufposition liegt, beendet, wenn die beim oberen Totpunkt gemessene Drehgeschwindigkeit der Kurbelwelle einem Maximalwert der kinetischen Energie entspricht.

Es ist zweckmäßig, die von den Kennfeldern ausgegebenen Anfangs- und Endzeitpunkte für die Ventilschließabschnitte mit Korrekturwerten zu beaufschlagen, die aus von der Motortemperatur abhängigen Kennlinien entnommen werden.

### Zeichnung

Anhand eines in der Zeichnung dargestellten Ausführungsbeispiels wird nachfolgend die Erfindung näher erläutert.

Es zeigen:
Figuren 1a und 1b die Ventilstellungen von vier Zylindern während des Auslaufs einer Brennkraftmaschine und
Figur 2 ein Funktionsdiagramm zur Auslaufsteuerung einer Brennkraftmaschine.

### Beschreibung eines Ausführungsbeispiels

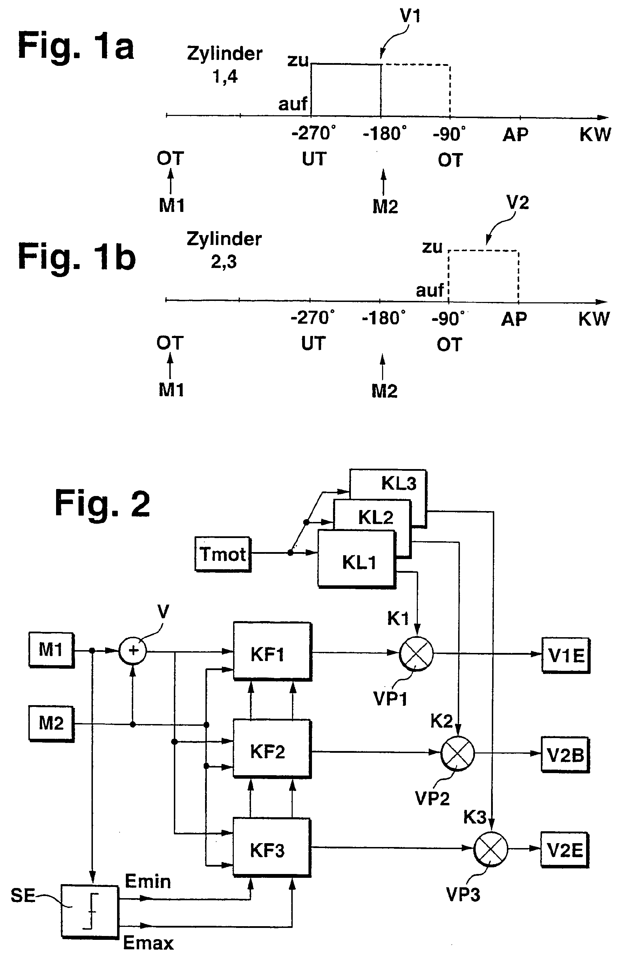

Am Beispiel einer Brennkraftmaschine mit vier Zylindern wird nun das der Erfindung zugrunde liegende Prinzip der Auslaufsteuerung beschrieben. Um z.B. die Kolben in den Zylindern 1 und 4 nach dem Abschalten der Zündung in eine gezielte Position zu bringen, die beispielsweise einer Winkelstellung der Kurbelwelle von 90° nach dem oberen Totpunkt OT entspricht, werden die Gasaustauschventile (Einlaß- und Auslaßventile) nach einem bestimmten, in den Figuren 1a und 1b dargestellten Modus geschlossen und wieder geöffnet. Das in der Figur 2 dargestellte Funktionsdiagramm verdeutlicht, wie die Ansteuerung der einzelnen Gasauslaßventile erfolgt, damit die Kolben, z.B. in den Zylindern 1 und 4, in der gewünschten Auslaufposition stehenbleiben. In den Figuren 1a und 1b, in denen die Ventilschließabschnitte V1 und V2 der Zylinder 1, 4 und der Zylinder 2, 3 über dem Kurbelwellenwinkel KW aufgetragen sind, ist die gewünschte Auslaufposition mit AP bezeichnet und befindet sich dort in einer Winkelstellung der Kurbelwelle von 90° nach dem oberen Totpunkt OT.

Der Verfahrensablauf zur Auslaufsteuerung der Brennkraftmaschine beginnt damit, daß nach dem Abschalten der Zündung nach einer vorgegebenen Anzahl von Kurbelwellenumdrehungen die Drehgeschwindigkeit der Kurbelwelle beim Durchlaufen des oberen Totpunktes OT gemessen wird. Dieser Meßwert der Drehgeschwindigkeit ist in den Figuren 1a, 1b und 2 mit M1 bezeichnet. Der Kurbelwellenwinkel KW und die Drehgeschwindigkeit M1 der Kurbelwelle werden in an sich bekannter Weise (vgl. z.B. DE 39 32 072 A1) mittels einer sich auf der Kurbelwelle befindenden Codescheibe ermittelt. In dem auf dem oberen Totpunkt OT, in dem der erste Meßwert M1 der Drehgeschwindigkeit bestimmt wird, folgenden unteren Totpunkt UT werden die Gasaustauschventile der Zylinder 1 und 4 geschlossen. In dem dargestellten Ausführungsbeispiel liegt der genannte untere Totpunkt UT um einen Kurbelwellenwinkel KW von -270° vor der Auslaufposition AP. Dieser erste im unteren Totpunkt UT beginnende erste Ventilschließabschnitt V1 endet in einem Kurbelwellenwinkelbereich von -180° bis - 90° vor der Auslaufposition AP. Wie der genaue Endzeitpunkt V1E des ersten Ventilschließabschnitts V1 bestimmt wird, wird anhand des Funktionsdiagramms in Figur 2 beschrieben. Um das Ende V1E des ersten Ventilschließabschnitts V1 ermitteln zu können, wird die Drehgeschwindigkeit der Kurbelwelle beim Durchlaufen der Winkelstellung von -180° vor der Auslaufposition AP gemessen. Dieser zweite Meßwert wird mit M2 bezeichnet.

In einem Verknüpfungspunkt V wird die Differenz zwischen den beiden Meßwerten M1 und M2 für die Drehgeschwindigkeit der Kurbelwelle gebildet. Diese Differenz der Meßwerte und der zweite Meßwert M2 werden einem ersten Kennfeld KF1 zugeführt, welches in Abhängigkeit von den beiden genannten Eingangsgrößen den Endzeitpunkt V1E für den ersten Ventilschließabschnitt V1 ausgibt. Mit anderen Worten: Das Ausgangssignal V1E des ersten Kennfeldes KF1 gibt die Winkelstellung der Kurbelwelle wieder, bei der der erste Ventilschließabschnitt V1 beendet werden soll.

In dem Funktionsdiagramm findet eine Schwellwertentscheidung SE für den ersten zum oberen Totzeitpunkt OT ermittelten Meßwert M1 für die Drehgeschwindigkeit der Kurbelwelle statt. Bei dieser Schellwertentscheidung SE wird ermittelt, ob der erste Meßwert M1 einer minimalen kinetischen Energie Eₘᵢₙ oder einer maximalen kinetischen Energie Eₘₐₓ der Kurbelwellenbewegung entspricht. Diese beiden Grenzwerte Eₘᵢₙ und Eₘₐₓ für die kinetische Energie nach dem Ausschalten der Zündung hängen von der Beschaffenheit des jeweiligen Motors und seinen Nebenaggregaten ab.

Wie in der Figur 1b dargestellt, schließt an dem ersten Ventilschließabschnitt V1 der Zylinder 1 und 4 ein zweiter Ventilschließabschnitt V2 der Zylinder 2 und 3 an. Dieser zweite Ventilschließabschnitt V2 beginnt frühestens bei einer Kurbelwinkelstellung von -90° vor der Auslaufposition AP und endet spätestens in unmittelbarer Nähe vor der Auslaufposition AP. Den exakten Beginn und das exakte Ende für den zweiten Ventilschließabschnitt V2 werden aus einem zweiten Kennfeld KF2 und einem dritten Kennfeld KF3 herausgelesen. Diesen beiden Kennfeldern KF2 und KF3 werden ebenfalls als Eingangsgrößen die Differenz zwischen den beiden Meßwerten M1 und M2 und der Meßwert M2 selbst zugeführt. Das zweite Kennfeld KF2 gibt in Abhängigkeit von diesen Größen den Beginn V2B und das dritte Kennfeld KF3 gibt in Abhängigkeit von den genannten Größen das Ende V2E des zweiten Ventilschließabschnitts V2 an. Mit dem Beginn V2B und dem Ende V2E des zweiten Ventilschließabschnitts sind immer Kurbelwinkelstellungen bezüglich der Auslaufposition AP gemeint. Dem zweiten und dem dritten Kennfeld KF2 und KF3 werden ebenfalls die Ausgangssignale der Schwellwertentscheidung SE zugeführt. Entspricht nämlich der erste Meßwert M1 der Drehgeschwindigkeit der Kurbelwelle zum Zeitpunkt des ersten oberen Totpunktes nach Abschalten der Zündung der minimalen kinetischen Energie Eₘᵢₙ, so unterdrücken die beiden Kennfelder KF2 und KF3 den zweiten Ventilschließabschnitt, so daß die Ventile der Zylinder 2 und 3 geöffnet bleiben. Im anderen Extremfall, wenn der erste Meßwert M1 dem oberen Extremwert Eₘₐₓ der kinetischen Energie entspricht, gibt das zweite Kennfeld KF2 als Beginn V2B für den zweiten Ventilschließabschnitt V2, wie in der Figur 1b dargestellt, die Kurbelwinkelstellung von -90° vor der Auslaufposition AP an. Das dritte Kennfeld KF3 gibt in diesem Fall, gemäß der Darstellung in Figur 1b, als Ende V2Ee für den zweiten Ventilschließabschnitt V2 eine Kurbelwellenstellung in unmittelbarer Nähe vor der Auslaufposition AP an.

Es gibt eine Reihe von Störeinflüssen, wie z.B. ein mit der Temperatur und Verschmutzung variierender Reibwerte sowie Alterungseinflüsse, welche ein exaktes Erreichen der Auslaufposition AP verhindern. Um dem entgegenzuwirken, ist es zweckmäßig, die Ausgangsgrößen der Kennfelder KF1, KF2 und KF3 mit Korrekturgrößen K1, K2 und K3 zu beaufschlagen. Deshalb sind, wie in der Figur 2 dargestellt, Verknüpfungspunkte VP1, VP2 und VP3 vorgesehen, in welchen die Ausgangssignale der Kennfelder KF1, KF2 und KF3 mit den aus Kennlinien KL1, KL2 und K13 ausgelesenen Korrekturgrößen K1, K2 und K3 multiplikativ oder additiv verknüpft werden. Die Kennlinien KL1, KL2 und KL3 liefern von der Motortemperatur Tₘₒₜ abhängige Korrekturwerte K1 (für das Ende V1E des ersten Ventilschließabschnitts V1), K2 (für den Beginn V2B des zweiten Ventilschließabschnitts V2) und K3 (für das Ende V2E des zweiten Ventilschließabschnitts V2). Die Kennlinien KL1, KL2 und KL3 könnten auch noch neben der Motortemperatur Tₘₒₜ die Laufzeit des Motors bei der Bildung der Korrekturgrößen K1, K2 und K3 berücksichtigen.

Vorangehend wurde die Auslaufsteuerung am Beispiel einer Brennkraftmaschine mit vier Zylindern beschrieben. Das Verfahren läßt sich aber auch auf Brennkraftmaschinen mit einer anderen Zylinderzahl übertragen, wobei eine andere Zylindereinteilung für ein, zwei oder mehrere Ventilschließabschnitte erforderlich wird. Während beim vorangehend beschriebenen Ausführungsbeispiel davon ausgegangen wird, daß der erste Ventilschließabschnitt V1 einen festliegenden Beginn, nämlich ein Kurbelwellenwinkel KW von -270° vor der Auslaufposition AP, besitzt, kann auch dieser Beginn der ersten Ventilschließabschnitts V1 in Abhängigkeit von den Meßwerten M1 und M2 aus einem gesonderten Kennfeld herausgelesen werden.

## Patentansprüche

1. Verfahren zur Auslaufsteuerung einer Brennkraftmaschine, wobei der Kolben in mindestens einem Zylinder der Maschine in eine gezielte Position gebracht wird, die einer deutlich nach dem oberen Totpunkt liegenden Winkelstellung der Kurbelwelle entspricht, **dadurch gekennzeichnet, daß** die Gasauslaßventile von einem oder mehreren Zylindern der Brennkraftmaschine nach Abschalten der Zündung für einen oder mehrere Zeitabschnitte (V1, V2) geschlossen werden, wobei der Beginn (V2B) und das Ende (V1E, V2E) eines jeden Ventilschließabschnitts (V1, V2) so gesteuert werden, daß die Kurbelwelle in der gewünschten Auslaufposition (AP) stehenbleibt.

2. Verfahren nach Anspruch 1, **dadurch gekennzeichnet,**
- **daß** nach Abschalten der Zündung nach einer vorgegebenen Anzahl von Kurbelwellenumdrehungen die Drehgeschwindigkeit (M1) der Kurbelwelle beim Durchlaufen des oberen Totpunktes (OT) gemessen wird,
- daß im darauffolgenden unteren Totpunkt (UT) die Gasaustauschventile des mindestens einen Zylinders für einen ersten Ventilschließabschnitt (V1) geschlossen werden,
- **daß** die Drehgeschwindigkeit (M2) der Kurbelwelle beim Durchlaufen einer vorgegebenen Winkelstellung nach dem unteren Totpunkt (UT) erneut gemessen wird,
- **daß** in Abhängigkeit von den beiden Meßwerten (M1, M2) der Drehgeschwindigkeit der Kurbelwelle das Ende (V1E) des ersten Ventilschließabschnitts (V1) bestimmt wird und
- **daß** im Fall einer beim oberen Totpunkt (OT) gemessenen, einen Minimalwert (Eₘᵢₙ) der kinetischen Energie übersteigenden Drehgeschwindigkeit (M1) der Kurbelwelle die Gasaustauschventile mindestens eines weiteren Zylinders für einen zweiten Ventilschließabschnitt (V2) geschlossen werden, wobei der Schließzeitpunkt (V2E) und der Öffnungszeitpunkt (V2B) dieser Gasaustauschventile in Abhängigkeit der beiden Meßwerte (M1, M2) der Drehgeschwindigkeit der Kurbelwelle bestimmt werden.

3. Verfahren nach Anspruch 2, **dadurch gekennzeichnet, daß** in Abhängigkeit von der Differenz der beiden Meßwerte (M1, M2) der Drehgeschwindigkeit und von der nach dem unteren Totpunkt (UT) gemessenen Drehgeschwindigkeit (M2) der Kurbelwelle aus einem ersten Kennfeld (KF1) das Ende (V1E) des ersten Ventilschließabschnitts (V1), aus einem zweiten Kennfeld (KF2) der Beginn (V2B) des zweiten Ventilschließabschnitts (V2) und aus einem dritten Kennfeld (KF3) das Ende (V2E) des zweiten Ventilschließabschnitts (V2) herausgelesen werden.

4. Verfahren nach einem der Ansprüche 2 oder 3, **dadurch gekennzeichnet, daß** der erste Ventilschließabschnitt (V1) bei einer Winkelstellung der Kurbelwelle von 180° vor der vorgegebenen Auslaufposition (AP) beendet wird, wenn die beim oberen Totpunkt (OT) gemessene Drehgeschwindigkeit (M1) einem Minimalwert (Eₘᵢₙ) der kinetischen Energie entspricht, und daß der erste Ventilschließabschnitt (V1) bei einer Winkelstellung der Kurbelwelle von 90° vor der vorgegebenen Auslaufposition (AP) beendet wird, wenn die beim oberen Totpunkt (OT) gemessene Drehgeschwindigkeit (M1) einem Maximalwert (Eₘₐₓ) der kinetischen Energie entspricht.

5. Verfahren nach einem der Ansprüche 2 oder 3, **dadurch gekennzeichnet, daß** der zweite Ventilschließabschnitt (V2) bei einer Winkelstellung der Kurbelwelle von 90° vor der vorgegebenen Auslaufposition (AP) begonnen und bei einer Winkelposition, die in der Nähe der Auslaufposition (AP) liegt, beendet wird, wenn die beim oberen Totpunkt (OT) gemessene Drehgeschwindigkeit (M1) der Kurbelwelle einem Maximalwert (Eₘₐₓ) der kinetischen Energie entspricht.

6. Verfahren nach Anspruch 3, **dadurch gekennzeichnet, daß** die von den Kennfeldern (KF1, KF2, KF3) ausgegebenen Anfangs- und Endzeitpunkte (V1E, V2B, V2E) für die Ventilchließabschnitte (V1, V2) mit Korrekturwerten (K1, K2, K3) beaufschlagt werden, die aus von der Motortemperatur (Tₘₒₜ) abhängigen Kennlinien (KL1, KL2, KL3) entnommen werden.

## Claims

1. Method for controlling the stopping process of an internal combustion engine, with the piston in at least one cylinder of the engine being placed into a targeted position which corresponds to an angular position of the crankshaft situated a significant distance after top dead centre, **characterized in that**, after the deactivation of the ignition, the gas outlet valves of one or more cylinders of the internal combustion engine are closed for one or more time periods (V1, V2), with the start (V2B) and the end (V1E, V2E) of each valve closing period (V1, V2) being controlled such that the crankshaft comes to a standstill in the desired stop position (AP).

2. Method according to Claim 1, **characterized**
- **in that**, after the deactivation of the ignition, after a predefined number of crankshaft rotations, the rotational speed (M1) of the crankshaft is measured as top dead centre (OT) is run through,
- **in that**, at the subsequent bottom dead centre (UT), the gas exchange valves of the at least one cylinder are closed for a first valve closing period (V1),
- **in that** the rotational speed (M2) of the crankshaft is measured again as a predefined angular position after bottom dead centre (UT) is run through,
- **in that** the end (V1E) of the first valve closing period (V1) is determined as a function of the two measured values (M1, M2) of the rotational speed of the crankshaft, and
- **in that**, in the event of a rotational speed (M1) of the crankshaft, measured at top dead centre (OT), exceeding a minimum value (Eₘᵢₙ) of kinetic energy, the gas exchange valves of at least one further cylinder are closed for a second valve closing period (V2), with the closing time (V2E) and the opening time (V2B) of said gas exchange valves being determined as a function of the two measured values (M1, M2) of the rotational speed of the crankshaft.

3. Method according to Claim 2, **characterized in that** the end (V1E) of the first valve closing period (V1) is read out from a first characteristic map (KF1), the start (V2B) of the second valve closing period (V2) is read out from a second characteristic map (KF2), and the end (V2E) of the second valve closing period (V2) is read out from a third characteristic map (KF3), as a function of the difference between the two measured values (M1, M2) of the rotational speed and of the rotational speed (M2) of the crankshaft measured after bottom dead centre (UT).

4. Method according to one of Claims 2 or 3, **characterized in that** the first valve closing period (V1) is ended at an angular position of the crankshaft of 180° before the predefined stop position (AP) if the rotational speed (M1) measured at top dead centre (OT) corresponds to a minimum value (Eₘᵢₙ) of kinetic energy, and **in that** the first valve closing period (V1) is ended at an angular position of the crankshaft of 90° before the predefined stop position (AP) if the rotational speed (M1) measured at top dead centre (OT) corresponds to a maximum value (Eₘₐₓ) of kinetic energy.

5. Method according to one of Claims 2 or 3, **characterized in that** the second valve closing section (V2) is started at an angular position of the crankshaft of 90° before the predefined stop position (AP), and ended at an angular position which lies in the vicinity of the stop position (AP), if the rotational speed (M1) of the crankshaft measured at top dead centre (OT) corresponds to a maximum value (Eₘₐₓ) of kinetic energy.

6. Method according to Claim 3, **characterized in that** the start and end times (V1E, V2B, V2E), which are output by the characteristic maps (KF1, KF2, KF3), for the valve closing periods (V1, V2) are manipulated using corrective values (K1, K2, K3) which are gathered from characteristic curves (KL1, KL2, KL3) which are dependent on the engine temperature (Tₘₒₜ).

## Revendications

1. Procédé pour commander l'arrêt d'un moteur à combustion interne, dans lequel le piston dans au moins un cylindre de la machine est amené dans une position spécifique, qui correspond à une position angulaire du vilebrequin située nettement après le point mort haut, **caractérisé en ce que** les soupapes de sortie des gaz d'un ou de plusieurs cylindres du moteur à combustion interne sont fermées après la coupure de l'allumage pendant un ou plusieurs intervalles de temps (V1, V2), le début (V2B) et la fin (V1E, V2E) de chaque intervalle de fermeture de soupape (V1, V2) étant commandés de telle sorte que le vilebrequin reste dans la position d'arrêt souhaitée (AP).

2. Procédé selon la revendication 1, **caractérisé en ce que :**
- après la coupure de l'allumage après un certain nombre prédéfini de rotations du vilebrequin, la vitesse de rotation (M1) du vilebrequin est mesurée lors de son passage au point mort haut (OT),
- dans le point mort bas suivant (UT), les soupapes d'échange gazeux de l'au moins un cylindre sont fermées pendant un premier intervalle de fermeture de soupape (V1),
- la vitesse de rotation (M2) du vilebrequin lors du passage par une position angulaire prédéfinie après le point mort bas (UT) est à nouveau mesurée,
- en fonction des deux valeurs de mesure (M1, M2) de la vitesse de rotation du vilebrequin, la fin (V1E) du premier intervalle de fermeture de soupape (V1) est déterminée et
- dans le cas d'une vitesse de rotation (M1) du vilebrequin mesurée au point mort haut (OT) dépassant une valeur minimale (Eₘᵢₙ) de l'énergie cinétique, les soupapes d'échange gazeux d'au moins un autre cylindre sont fermées pendant un deuxième intervalle de fermeture des soupapes (V2), l'intervalle de fermeture (V2E) et l'intervalle d'ouverture (V2B) de ces soupapes d'échange gazeux étant déterminés en fonction des deux valeurs de mesure (M1, M2) de la vitesse de rotation du vilebrequin.

3. Procédé selon la revendication 2, **caractérisé en ce qu'**en fonction de la différence des deux valeurs de mesure (M1, M2) de la vitesse de rotation et de la vitesse de rotation (M2) du vilebrequin mesurée après le point mort bas (UT), on déduit à partir d'un premier champ caractéristique (KF1), la fin (V1E) du premier intervalle de fermeture de soupape (V1), à partir d'un deuxième champ caractéristique (KF2), le début (V2B) du deuxième intervalle de fermeture de soupape (V2) et à partir d'un troisième champ caractéristique (KF3), la fin (V2E) du deuxième intervalle de fermeture de soupape (V2).

4. Procédé selon l'une quelconque des revendications 2 ou 3, **caractérisé en ce que** le premier intervalle de fermeture de soupape (V1) est terminé dans le cas d'une position angulaire du vilebrequin de 180° avant la position d'arrêt prédéfinie (AP), lorsque la vitesse de rotation (M1) mesurée au point mort haut (OT) correspond à une valeur minimale (Eₘᵢₙ) de l'énergie cinétique, et **en ce que** le premier intervalle de fermeture de soupape (V1) est terminé dans le cas d'une position angulaire du vilebrequin de 90° avant ladite position d'arrêt (AP), lorsque la vitesse de rotation (M1) mesurée au point mort haut (OT) correspond à une valeur maximale (Eₘₐₓ) de l'énergie cinétique.

5. Procédé selon l'une quelconque des revendications 2 ou 3, **caractérisé en ce que** la deuxième portion de fermeture de soupape (V2) est commencée dans le cas d'une position angulaire du vilebrequin de 90° avant la position d'arrêt prédéfinie (AP), et est terminée dans le cas d'une position angulaire qui se situe à proximité de la position d'arrêt (AP), lorsque la vitesse de rotation (M1) du vilebrequin mesurée au point mort haut (OT) correspond à une valeur maximale (Eₘₐₓ) de l'énergie cinétique.

6. Procédé selon la revendication 3, **caractérisé en ce que** les instants de début et de fin (V1E, V2B, V2E) pour les intervalles de fermeture de soupape (V1, V2) issus par les champs caractéristiques (KF1, KF2, KF3) sont affectés de valeurs de correction (K1, K2, K3), qui sont prélevées de lignes caractéristiques (KL1, KL2, KL3) dépendant de la température du moteur (Tₘₒₜ).
